# EUROPEAN PATENT APPLICATION

(11) **EP 3 075 953 A1**
(43) Date of publication of application: **05.10.2016**
(21) Application number: 16162810.2
(22) Date of filing: 30.03.2016
(51) Int. Cl.: F01D 5/08, F01D 5/18, F02C 7/143

(54) **HEAT PIPE TEMPERATURE MANAGEMENT SYSTEM FOR A TURBOMACHINE**

(30) Priority: 02.04.2015 US 201514676950
(71) Applicant: General Electric Company, Schenectady, NY 12345 (US)
(72) Inventor: EKANAYAKE, Sanji, Atlanta, GA Georgia 30339 (US); MESTRONI, Julio Enrique, Atlanta, GA Georgia 30339 (US); RIZZO, Joseph Paul, Greenville, SC South Carolina 29615-4614 (US); SCIPIO, Alston Ilford, Atlanta, GA Georgia 30339 (US); YANG, Timothy Tahteh, Greenville, SC South Carolina 29615-4614 (US); WICKERT, Thomas Edward, Greenville, 29615 (US)
(74) Representative: Lee, Brenda

(57) **Abstract**

A turbomachine 100 includes a compressor 110, combustor 120 and a turbine 130. An intercooler 220 is operatively connected to the compressor. The intercooler includes a first plurality of heat pipes 222 that extend into the inter-stage gap of the compressor, and the heat pipes are operatively connected to a first manifold 224. The heat pipes and the manifold are configured to transfer heat from the compressed airflow to one or more heat exchangers. A first cooling system 210 is operatively connected to the turbine. The first cooling system includes a second plurality of heat pipes 212 attached to or embedded within at least one of the plurality of wheels 133. The compressor bleed off air is configured to impinge onto at least one of the plurality of wheels or the second plurality of heat pipes. The second plurality of heat pipes and the compressor bleed off air are configured to cool at least one of the plurality of wheels.

## Description

### BACKGROUND OF THE INVENTION

Exemplary embodiments of the present invention relate to the art of turbomachines and, more particularly, to a heat pipe intercooler for a turbomachine.

Turbomachines include a compressor operatively connected to a turbine that, in turn, drives another machine such as, a generator. The compressor compresses an incoming airflow that is delivered to a combustor to mix with fuel and be ignited to form high temperature, high pressure combustion products. The high temperature, high pressure combustion products are employed to drive the turbine. In some cases, the compressed airflow leaving the compressor is re-compressed to achieve certain combustion efficiencies. However, recompressing the compressed airflow elevates airflow temperature above desired limits. Accordingly, prior to being recompressed, the airflow is passed through an intercooler. The intercooler, which is between two compressor stages, lowers the temperature of the compressed airflow such that, upon recompressing, the temperature of the recompressed airflow is within desired limits. However, conventional intercoolers are large systems requiring considerable infrastructure and capital costs.

Simple and combined cycle gas turbine systems are designed to use a variety of fuels ranging from gas to liquid, at a wide range of temperatures. In some instances, the fuel might be at a relatively low temperature when compared to the compressor discharge air temperature. Utilizing low temperature fuel impacts emissions, performance, and efficiency of the gas turbine system. To improve these characteristics, it is desirable to increase the fuel temperature before combusting the fuel.

By increasing the temperature of the fuel before it is burned, the overall thermal performance of the gas turbine system may be enhanced. Fuel heating generally improves gas turbine system efficiency by reducing the amount of fuel required to achieve the desired firing temperature. One approach to heating the fuel is to use electric heaters or heat derived from a combined cycle process to increase the fuel temperature. However, existing combined cycle fuel heating systems often use steam flow that could otherwise be directed to a steam turbine to increase combined cycle output.

### BRIEF DESCRIPTION OF THE INVENTION

In an aspect of the present invention, a turbomachine includes a compressor including an intake portion and an outlet portion. The compressor has a plurality of rotor blades and a plurality of stator vanes, and an inter-stage gap exists between adjacent rows of the rotor blades and the stator vanes. The compressor compresses air received at the intake portion to form a compressed airflow that exits into the outlet portion. A combustor is operably connected with the compressor, and the combustor receives the compressed airflow. A turbine is operably connected with the combustor, and the turbine receives combustion gas flow from the combustor. The turbine has a plurality of wheels, a plurality of nozzles, and a turbine casing forms an outer shell of the turbine. The turbine receives compressor bleed off air to cool at least one of the plurality of wheels. An intercooler is operatively connected to the compressor. The intercooler includes a first plurality of heat pipes that extend into the inter-stage gap. The first plurality of heat pipes are operatively connected to a first manifold, and the first plurality of heat pipes and the first manifold are configured to transfer heat from the compressed airflow to one or more heat exchangers. A first cooling system is operatively connected to the turbine. The first cooling system includes a second plurality of heat pipes attached to or embedded within at least one of the plurality of wheels. The compressor bleed off air is configured to impinge onto at least one of the plurality of wheels or the second plurality of heat pipes. The second plurality of heat pipes and the compressor bleed off air are configured to cool at least one of the plurality of wheels.

In another aspect of the present invention, a temperature management system for a turbomachine is provided. The turbomachine has a compressor including an intake portion and an outlet portion. The compressor has a plurality of rotor blades and a plurality of stator vanes, and an inter-stage gap that exists between adjacent rows of the rotor blades and the stator vanes. The compressor compresses air received at the intake portion to form a compressed airflow that exits into the outlet portion. A combustor is operably connected with the compressor, and the combustor receives the compressed airflow. A turbine is operably connected with the combustor, and the turbine receives combustion gas flow from the combustor. The turbine has a plurality of turbine blades, a plurality of wheels, a plurality of nozzles, and a turbine casing forms an outer shell of the turbine. The turbine receives compressor bleed off air to cool at least one of the plurality of wheels. The temperature management system includes an intercooler operatively connected to the compressor. The intercooler includes a first plurality of heat pipes that extend into the inter-stage gap. The first plurality of heat pipes are operatively connected to a first manifold, and the first plurality of heat pipes and the first manifold are configured to transfer heat from the compressed airflow to one or more heat exchangers. The temperature management system also includes a first cooling system operatively connected to the turbine. The first cooling system includes a second plurality of heat pipes attached to or embedded within at least one of the plurality of wheels. The compressor bleed off air from the compressor is configured to impinge onto at least one of the plurality of wheels or the second plurality of heat pipes. The second plurality of heat pipes and the compressor bleed off air are configured to cool at least one of the plurality of wheels.

### BRIEF DESCRIPTION OF THE DRAWINGS

FIG. 1 illustrates a simplified schematic diagram of a turbomachine.
FIG. 2 illustrates a partially schematic, axial sectional view through a portion of the turbomachine, according to an aspect of the present invention.
FIG. 3 illustrates a cross-sectional and schematic view of the intercooler, according to an aspect of the present invention.
FIG. 4 illustrates a partially schematic and radial cross-sectional view of the intercooler, according to an aspect of the present invention.
FIG. 5 illustrates an axial, cross-sectional view of a turbine wheel incorporating a second plurality of heat pipes, according to an aspect of the present invention.
FIG. 6 illustrates a partial circumferential, cross-sectional view of a turbine wheel incorporating the second plurality of heat pipes, according to an aspect of the present invention.
FIG. 7 illustrates a cross-sectional and schematic view of a second cooling system, according to another aspect of the present invention.
FIG. 8 illustrates a cross-sectional and schematic view of the second cooling system, according to another aspect of the present invention.
FIG. 9 illustrates a partially schematic and radial cross-sectional view of the second cooling system, according to an aspect of the present invention.
FIG. 10 illustrates a cross sectional shape of a circular or cylindrical heat pipe, according to an aspect of the present invention.
FIG. 11 illustrates a cross sectional shape of an oval heat pipe, according to an aspect of the present invention.
FIG. 12 illustrates a cross sectional shape of a polygonal heat pipe, according to an aspect of the present invention.
FIG. 13 illustrates a cross sectional shape of a rectangular with rounded corners heat pipe, according to an aspect of the present invention.
FIG. 14 illustrates a cross sectional shape of a circular or cylindrical heat pipe with a plurality of fins, according to an aspect of the present invention.
FIG. 15 illustrates a schematic view of a turbomachine incorporating the intercooler and cooling system, according to an aspect of the present invention.
FIG. 16 is a partially schematic, axial sectional view through a portion of the turbomachine, according to an aspect of the present invention.
FIG. 17 illustrates a cross-sectional and schematic view of a third cooling system, according to an aspect of the present invention.
FIG. 18 illustrates a partially schematic and radial cross-sectional view of the third cooling system, according to an aspect of the present invention.
FIG. 19 illustrates a cross-sectional and schematic view of an aftercooler, according to an aspect of the present invention.
FIG. 20 illustrates a partially schematic and radial cross-sectional view of the aftercooler, according to an aspect of the present invention.
FIG. 21 illustrates a cross-sectional and schematic view of the fourth cooling system, according to an aspect of the present invention.
FIG. 22 illustrates a schematic representation of the fourth cooling system, according to an aspect of the present invention.
FIG. 23 illustrates a simplified block diagram of the turbomachine incorporating the intercooler, first cooling system, second cooling system, third cooling system and aftercooler, according to an aspect of the present invention.

### DETAILED DESCRIPTION OF THE INVENTION

One or more specific aspects/embodiments of the present invention will be described below. In an effort to provide a concise description of these aspects/embodiments, all features of an actual implementation may not be described in the specification. It should be appreciated that in the development of any such actual implementation, as in any engineering or design project, numerous implementation-specific decisions must be made to achieve the developers' specific goals, such as compliance with machine-related, system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," and "the" are intended to mean that there are one or more of the elements. The terms "comprising," "including," and "having" are intended to be inclusive and mean that there may be additional elements other than the listed elements. Any examples of operating parameters and/or environmental conditions are not exclusive of other parameters/conditions of the disclosed embodiments. Additionally, it should be understood that references to "one embodiment", "one aspect" or "an embodiment" or "an aspect" of the present invention are not intended to be interpreted as excluding the existence of additional embodiments or aspects that also incorporate the recited features.

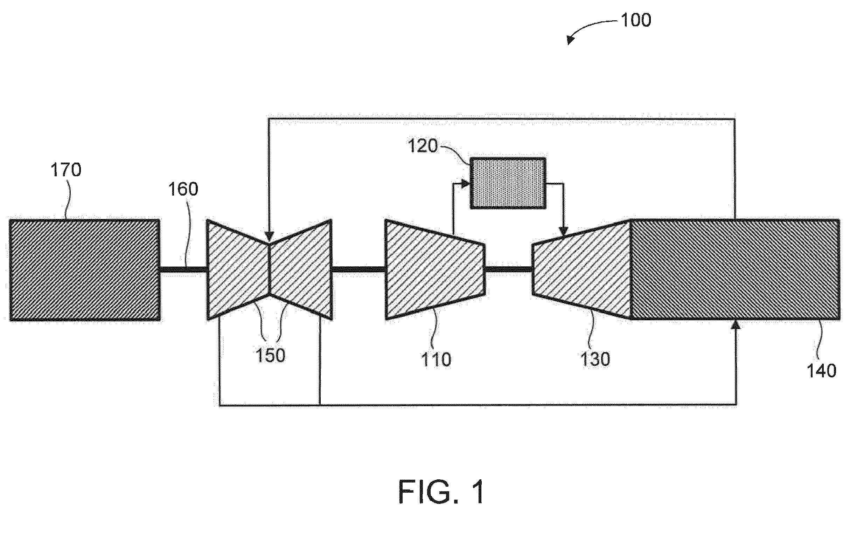

FIG. 1 illustrates a simplified diagram of a turbomachine 100. The turbomachine includes a compressor 110 operably connected to a combustor 120, and the combustor 120 is operably connected to a turbine 130. The turbine's exhaust may be operably connected to a heat recovery steam generator (HRSG) 140. The HRSG 140 generates steam that is directed into a steam turbine 150. In this example, all the turbomachines are arranged in a single shaft configuration, and the shaft 160 drives a generator 170. It is to be understood that the term turbomachine includes compressors, turbines or combinations thereof.

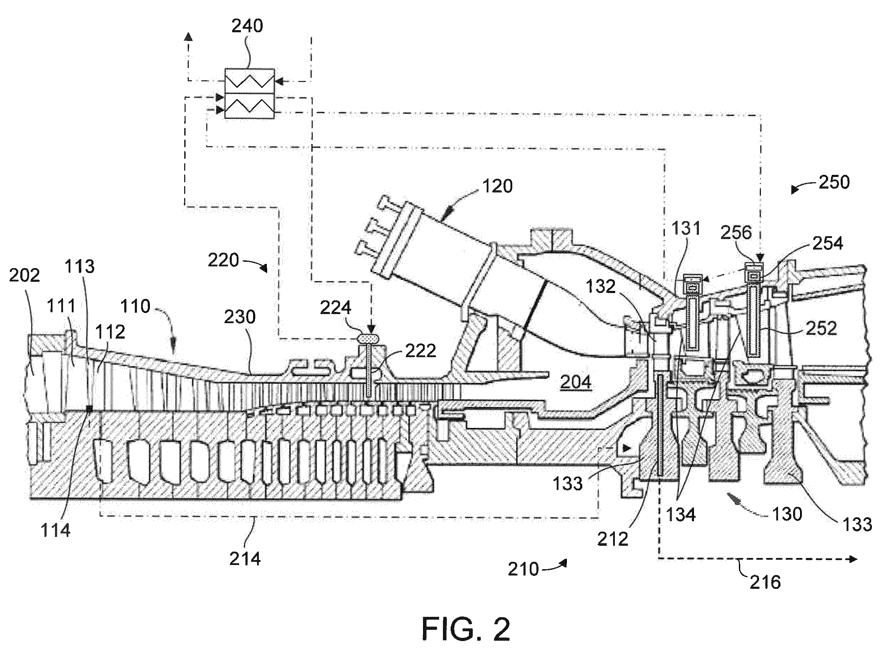

FIG. 2 is a partially schematic, axial sectional view through a portion of the turbomachine, according to an aspect of the present invention. The turbomachine 100 includes a compressor 110 having an intake portion 202 and an outlet portion 204. The compressor compresses air received at the intake portion 202 and forms a compressed airflow that exits from/into the outlet portion 204. The combustor 120 is operably connected with the compressor 110, and the combustor 120 receives the compressed airflow. The turbine 130 is operably connected with the combustor 120, and the turbine 130 receives combustion gas flow from the combustor 120. The turbine 130 includes a turbine casing 131. The turbine casing 131 forms an outer shell of the turbine 130. The turbine also includes a plurality of buckets 132, turbine wheels 133 and a plurality of nozzles 134.

An intercooler 220 is operatively connected to an inter-stage gap 113 of the compressor 110. The inter-stage gap 113 is a gap between rotor blades 111 and stator vanes 112 in the compressor. The inter-stage gap may be located between any adjacent rotor blades and stator vanes. The intercooler 220 includes a first plurality of heat pipes 222 that extend into the inter-stage gap. For example, the inter-stage gap may be located between the first stage and the last stage, in an air bleed-off stage of the compressor, or at or between any stage(s) as desired in the specific application. The first heat pipes 222 are operatively connected to a first manifold 224, and the heat pipes 222 and manifold 224 are configured to transfer heat from the compressed airflow in the compressor to one or more heat exchangers 240.

The first heat pipes 222 are placed or located in the inter-stage gap, so that the first heat pipes extend from an outer portion of compressor case 230 and into the inter-stage gap. In the example shown, first heat pipes 222 extend into the inter-stage gap corresponding to a 13^{th} stage of the compressor which corresponds to an air bleed-off stage. However, the first heat pipes could be located at any desired point or stage along compressor 110. Each first heat pipe 222 extends through the turbomachine casing and into the compressed airflow flow path. The first heat pipes 222 absorb heat from the compressed airflow and lower the temperature thereof.

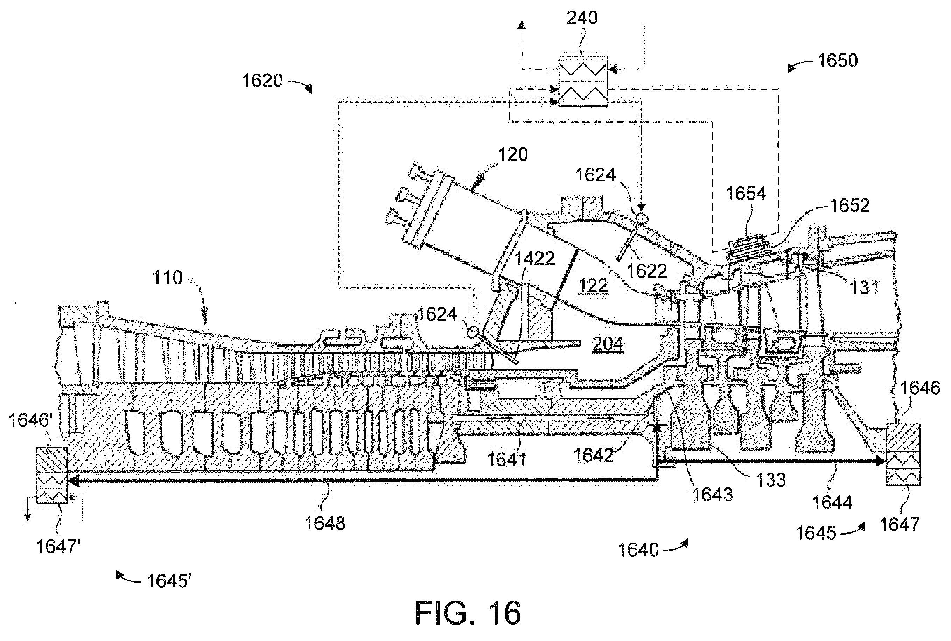

A first cooling system 210 includes a second plurality of heat pipes 212 attached to or embedded/located substantially within at least one of the turbine wheels 131. For example, the heat pipes 212 may be located within a first stage turbine wheel, as shown in FIG. 2. Alternatively, the heat pipes 212 may be located and/or arranged circumferentially around the upstream side of wheel 133 or located in multiple turbine wheel stages. The second plurality of heat pipes can be affixed to the inside of the rotor barrel cooling chamber 1643 (see FIG. 16). The heat pipes 212 extend from an outer radius location of wheel 133 (e.g., near bucket 132) to an inner radius location of the wheel. With this configuration the heat pipes 212 will transfer or conduct heat from the hotter outer radial portions of the wheel 133 to the cooler inner radial portion of the wheel.

The compressor bleed off air 214 is extracted from the compressor 110 at an early stage thereof. For example, the bleed off air 214 could be extracted from a first stage discharge bleed port of the compressor, indicated by 114, or between a first compressor stage and a third compressor stage, or at any suitable compressor stage as desired in the specific application. The advantage with earlier compressor stages, when compared to latter compressor stages, is that the air extracted (bled off) will be at a lower temperature. Lower temperature air is better at cooling due to its increased temperature differential with respect to comparatively hot turbine components. The compressor bleed off air 214 may be routed to the rotor barrel cooling chamber 1643 and/or the wheel 133 via any suitable duct system (not shown for clarity). For example, the bleed off air duct system could be routed along radially inner portions of the compressor 110 and turbine 130. In the example shown, the compressor bleed off air is configured to impinge onto an inner, low pressure radial/radius portion of the first stage turbine wheel. This radially inner portion of the wheel will be cooled and heat removed by the passing bleed off air. After contact with the wheel 133, the compressor bleed off air can be directed to the turbine exhaust, illustrated by line 216.

A second cooling system 250 is operatively connected to the turbine 130. For example, the second cooling system 250 includes a third plurality of heat pipes 252 that are located in at least a portion of the nozzles 134. The heat pipes 252 are in thermal communication with the nozzles and the heat pipes may also be in thermal communication with turbine casing 131. Heat absorbed from the nozzles 134 and subsequently into the heat pipes 252 is transferred to heat pipes 254, which may be contained within the turbine casing or attached to the turbine casing. The third plurality of heat pipes may include both heat pipes 252 and heat pipes 254. The heat from the third plurality of heat pipes is conducted to third manifold 256. This heat may then be transferred to the heat pipe heat exchanger 240. The third plurality of heat pipes 252, 254 may be circumferentially located around the turbine and/or located in one or more turbine nozzles.

As the turbine 130 operates, combustion gases generate heat, and some of this heat is transferred to the nozzles 134. This heat may be harvested by the third plurality of heat pipes 252, 254. The heat pipes 252, 254 transfer this heat to the third manifold 256 and subsequently to one or more heat exchangers. As non-limiting examples, the third plurality of heat pipes may be located inside the nozzles 134, or located in the nozzles and within the turbine casing 131. In the latter case, the heat pipes are configured to maintain thermal communication with the turbine casing 131. In other embodiments, the heat pipes 252, 254 may be partially embedded in the turbine casing, or the heat pipes may extend external to the turbine casing. The heat pipes 252, 254 may be located in nozzles between (and including) the first through last stages of the turbine, or in any individual nozzle stage as desired in the specific application.

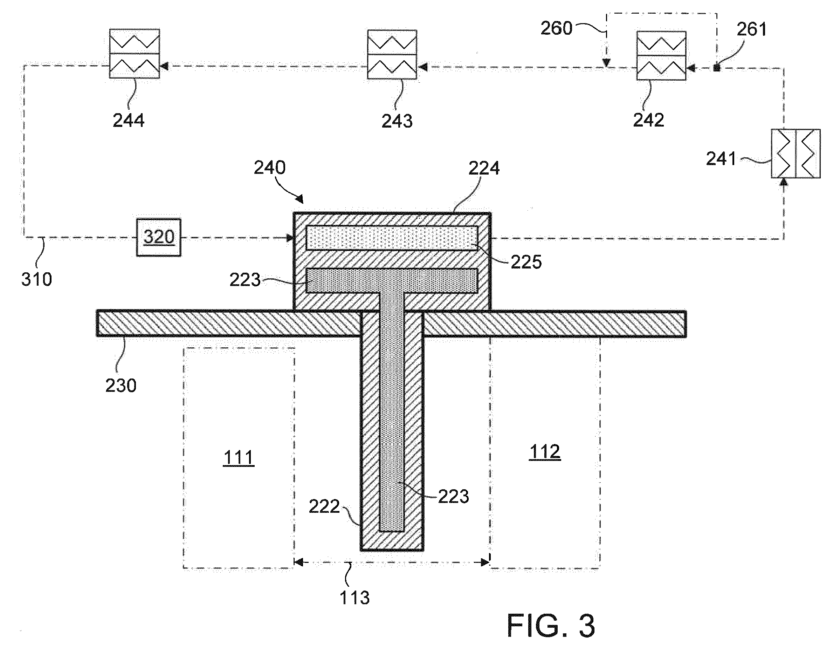

FIG. 3 illustrates a cross-sectional and schematic view of the intercooler 220, according to an aspect of the present invention. The first heat pipe 222 extends through the compressor's shell 230 or turbomachine shell and into the compressor's airflow. As one example only, the heat pipe 222 is located in inter-stage gap 113, which may be the 13^{th} stage having 13^{th} stage rotor blade 111 and 13^{th} stage stator vane 112. However, it is to be understood that the heat pipes 222 may be located in any gap between blades and vanes or the gap between any stage of the compressor, as desired in the specific application. The heat pipe 222 includes a heat transfer medium 223, such as a liquid metal or molten salt. The manifold 224 includes a coolant/heat transfer medium 225, such as water, glycol or oil. The manifold 224 is thermally connected to a heat pipe heat exchanger 240. A conduit 310 connects the heat pipe heat exchanger 240 to a plurality of other heat exchangers. For example, the other heat exchangers may be a fuel heating heat exchanger 241, a fuel pre-heating heat exchanger 242, a HRSG heat exchanger 243 and any other desired heat exchanger 244. The heat pipe heat exchanger 240 transfers the heat from the manifolds 224 to the heat transfer medium in conduit 310. As examples only, the conduit's heat transfer medium may be water, glycol, oil or any other suitable fluid. A pump 320 may be used to force the fluid through the conduit 310 and the heat exchangers. The heat exchangers may also include valve controlled bypass lines 260 (only one is shown for clarity). A valve 261 can be operated so that it directs flow around the heat exchanger (e.g., 242) via bypass line/conduit 260. This feature may be desirable if specific heat exchangers are to be "removed" (possibly temporarily) from the flow along conduit 310. The valves 261 can be manually controlled or remotely controlled.

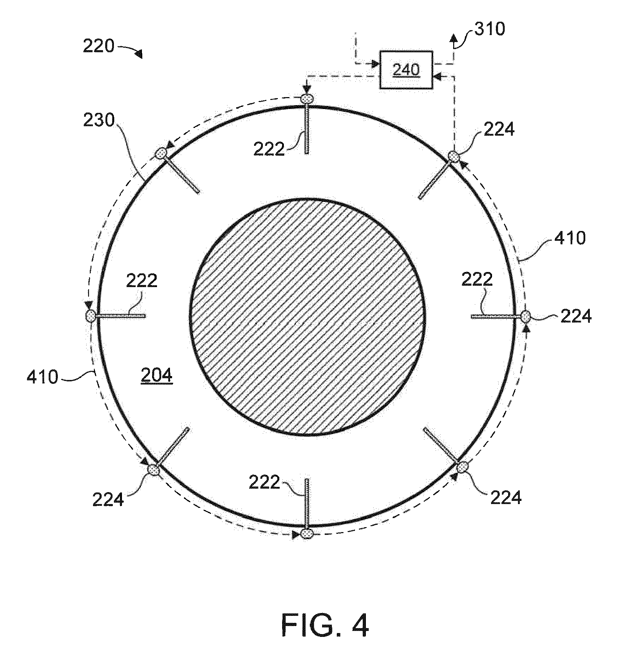

FIG. 4 illustrates a partially schematic and radial cross-sectional view of the intercooler 220, according to an aspect of the present invention. The heat pipes 222 are circumferentially located and distributed around the turbomachine 100 or compressor 110. The manifold 224 is connected in a circuit represented by line 410. For example, the manifold 224 would form a generally continuous flow loop around the turbomachine. A portion of this flow loop is interrupted and routed to the heat pipe heat exchanger 240, and the outlet therefrom is routed back the manifold 224. In this way, heat generated by the compressor airflow (via heat pipes 222) can be transferred to the heat exchanger 240.

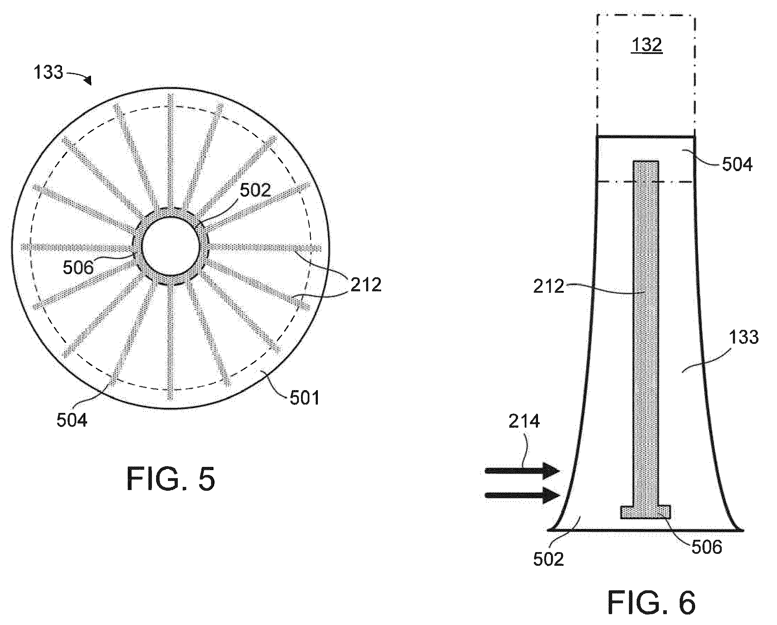

FIG. 5 illustrates an axial, cross-sectional view of a turbine wheel incorporating the second plurality of heat pipes 212, according to an aspect of the present invention. The turbine wheel 133 includes a plurality of dovetails circumferentially arranged around the outer radial portion of the wheel. Buckets 132 (not shown) are inserted into these dovetails. The dovetail region is indicated by 501. The heat pipes 212 are configured to extend from an inner radial portion/location 502 of wheel 133 to an outer radial portion/location 504. The inner radial portion may include a circumferential slot 506 that contains a circumferentially disposed heat pipe portion. The heat pipes 212 may include the circumferentially disposed heat pipe portion and the multiple radial branches that extend outward to the outer radial portions of wheel 133. In operation, heat pipes 212 will transfer heat from the hotter outer radial portion 504 of wheel 133 to the inner radial portion 502, thereby cooling the outer portions of wheel 133 and the buckets 132 attached thereto.

FIG. 6 illustrates a partial circumferential, cross-sectional view of the turbine wheel 133 incorporating the second plurality of heat pipes 212, according to an aspect of the present invention. The bucket 132 is shown in phantom. Heat pipe 212 extends from the outer radial location 504, and may extend past the bottom of the bucket's dovetail, to the inner radial location 502. The bucket 132 is exposed to hot combustion gases, and this heat will be conducted into the wheel 133. Some of this heat can be conducted away from the outer radial location 504 by heat pipes 212, which conduct or thermally transfer the heat to the inner radial location. Low temperature and low pressure compressor bleed air 214 can be directed to impinge on this inner radial location.

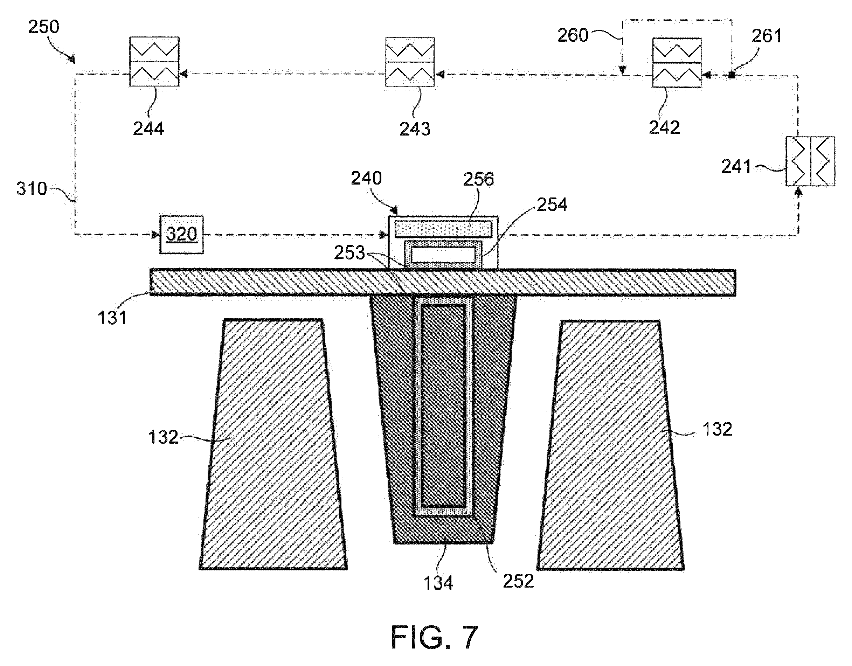

FIG. 7 illustrates a cross-sectional and schematic view of the second cooling system 250, according to an aspect of the present invention. The heat pipe 252 is located in the nozzle 134 and is in thermal communication with heat pipe 254. A third plurality of heat pipes 252 (e.g., a first sub-group of heat pipes) are located in a plurality of nozzles, for example there may be one heat pipe in one nozzle, and the heat pipes 254 (e.g., a second sub-group of heat pipes) may be contained within the turbine casing or attached to the turbine casing. The third manifold 256 is thermally connected to multiple heat pipes 254, and the heat pipes 254 may be arranged circumferentially about the turbine casing/shell 131. The manifold 256 includes a coolant/heat transfer medium, such as water, steam, glycol or oil. The manifold 256 is thermally connected to a heat pipe heat exchanger 240. A conduit 310 connects the heat pipe heat exchanger 240 to a plurality of other heat exchangers. For example, the other heat exchangers may be a fuel heating heat exchanger 241, a fuel pre-heating heat exchanger 242, a HRSG heat exchanger 243 and any other desired heat exchanger 244. The heat pipe heat exchanger 240 transfers the heat from the manifold(s) 256 to the heat transfer medium in conduit 310. As examples only, the conduit's heat transfer medium may be water, glycol, oil, steam or any other suitable fluid or gas. A pump 320 may be used to force the fluid through the conduit 310 and the heat exchangers. The heat exchangers may also include valve controlled bypass lines 260 (only one is shown for clarity). A valve 261 can be operated so that it directs flow around the heat exchanger (e.g., 242) via bypass line/conduit 260. This feature may be desirable if specific heat exchangers are to be "removed" (possibly temporarily) from the flow along conduit 310. The valves 261 can be manually controlled or remotely controlled.

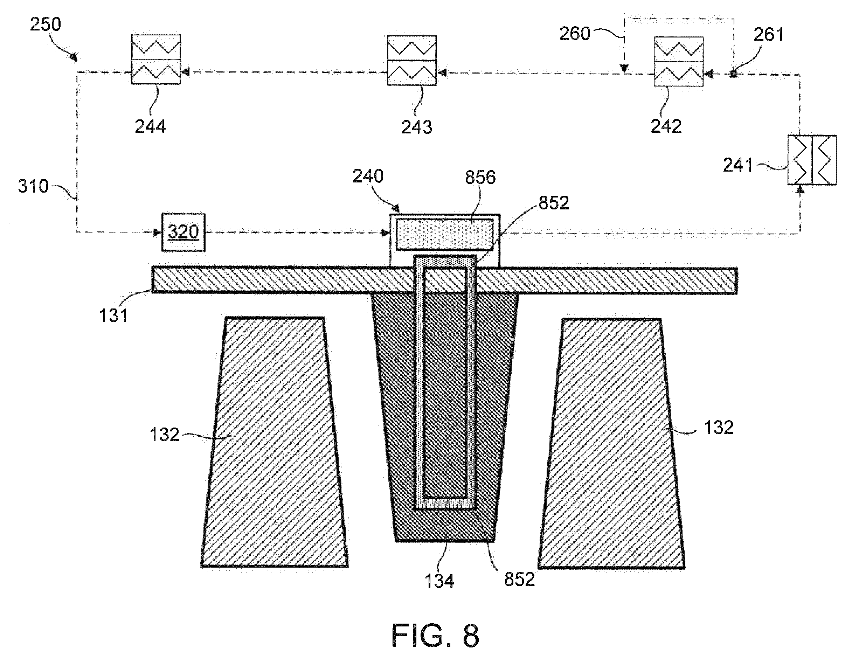

FIG. 8 illustrates a cross-sectional and schematic view of the second cooling system 250, according to another aspect of the present invention. The third plurality of heat pipes 852 are located in the nozzle 134 and extends through the turbine casing 131. The heat pipes 852 are in thermal communication with third manifold 856. The manifold 856 is thermally connected to multiple heat pipes 852, and the manifold 856 may be arranged circumferentially about the turbine casing/shell 131. Heat from the nozzle 134 is transferred from the heat pipes 852 to the manifold 856.

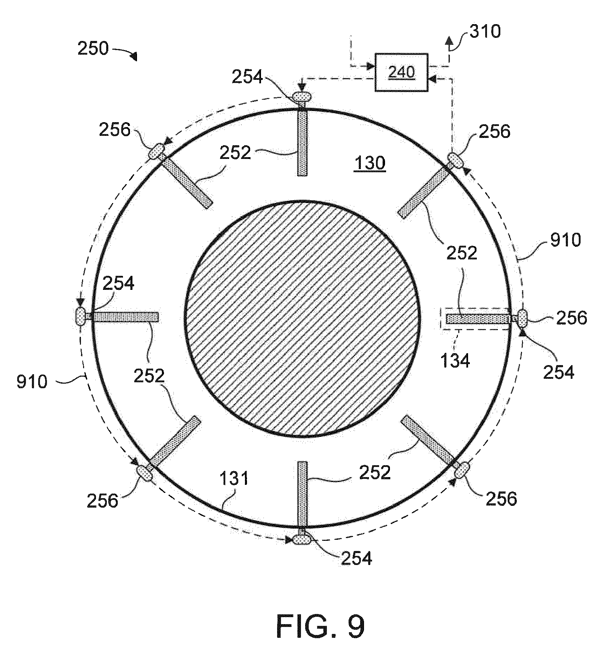

FIG. 9 illustrates a partially schematic and radial cross-sectional view of the second cooling system 250, according to an aspect of the present invention. The third plurality of heat pipes 252 are located in at least a portion of nozzles 134. The heat pipes 254 are circumferentially located and distributed around the turbine casing 131. The third manifold 256 is connected in a circuit represented by line 910. For example, the third manifold 256 would form a generally continuous flow loop around the turbine 130. A portion of this flow loop is interrupted and routed to the heat pipe heat exchanger 240, and the outlet therefrom is routed back the manifold 256. In this way, heat generated by the nozzles 134 and heat pipes 252, 254 can be transferred or conducted to the heat exchanger 240. The heat pipes 252, 254 or 852 may be referred to as the third plurality of heat pipes.

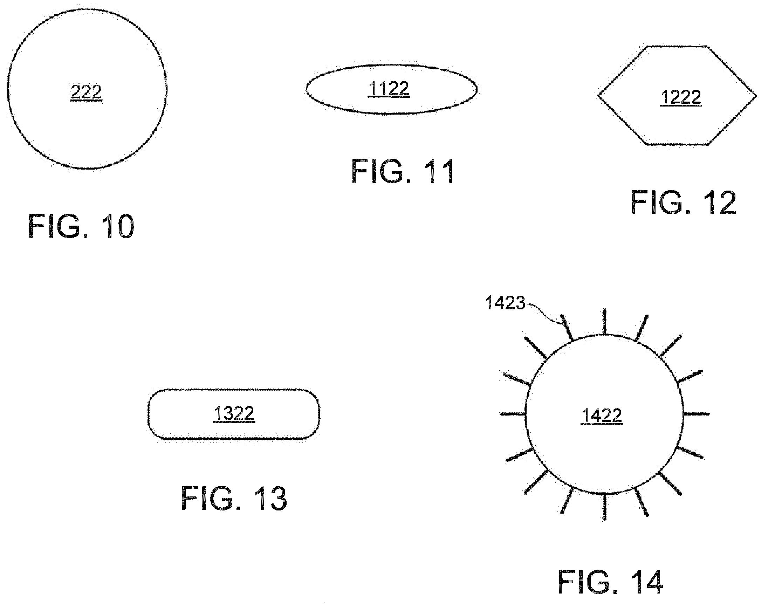

FIGs. 10-14 illustrate various cross sectional shapes for heat pipes, and it is to be understood that these shapes may be applied to all of the heat pipes herein described. FIG. 10 illustrates a cross sectional shape of a circular or cylindrical heat pipe 222, according to an aspect of the present invention. A cylindrical heat pipe is easy to manufacture and install with conventional tools. FIG. 11 illustrates a cross sectional shape of an oval heat pipe 1122, according to an aspect of the present invention. The oval heat pipe may have improved heat transfer characteristics compared to the cylindrical heat pipe. FIG. 12 illustrates a cross sectional shape of a polygonal heat pipe 1222, according to an aspect of the present invention. The polygonal shape may include rectangular, hexagonal, square or any other suitable polygonal shape. FIG. 13 illustrates a cross sectional shape of a rectangular with rounded corners heat pipe 1322. The rectangular with rounded corners shape may have improved heat transfer characteristics over the oval heat pipe, due to increased surface area. FIG. 14 illustrates a cross sectional shape of a circular or cylindrical heat pipe 1422 with a plurality of fins 1423, according to an aspect of the present invention. The fins are configured to increase the heat transfer capability of the heat pipe, may be arranged axially as shown or radially, and may be comprised of a material having high thermal conductivity, such as copper or aluminum.

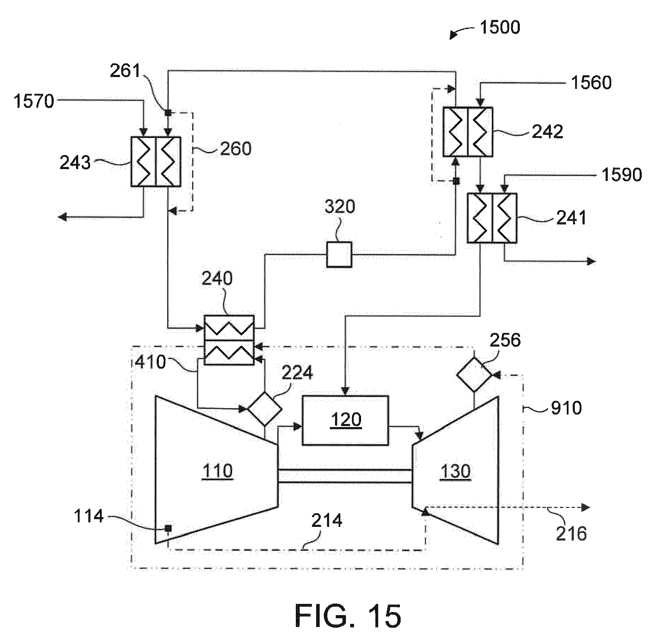

FIG. 15 illustrates a schematic view of a temperature management system 1500 incorporating the intercooler 220, first cooling system 210 and second cooling system 250, according to an aspect of the present invention. The turbomachine includes a compressor 110, combustor 120 and turbine 130. The intercooler 220 includes a plurality of heat pipes (not shown for clarity) connected to a first manifold 224. The first manifold 224 is connected to a heat pipe heat exchanger 240. The first cooling system 210 includes a second plurality of heat pipes 212 (not shown for clarity) and a supply of low pressure, low temperature compressor bleed off air 214 that is directed at the heat pipes 212 or inner radial location of a first stage turbine wheel 133. It is to be understood that the heat pipes 212 could be located on or in any stage turbine wheel. The second cooling system 250 includes a third plurality of heat pipes (not shown for clarity) connected to a third manifold 256. The third manifold 256 is connected to the heat pipe heat exchanger 240. A pump 320 circulates a coolant through a conduit system and a plurality of heat exchangers. The heat pipe heat exchanger is connected to a fuel/gas pre-heater heat exchanger 242. Fuel gas 1560 is input and travels to the combustor 120. The fuel/gas pre-heater heat exchanger is connected to a heat recovery steam generator (HSRG) heat exchanger 243. Water 1570 is input to the heat exchanger 243 and heated to an elevated temperature or steam, and is output to the HRSG economizer (not shown). Each heat exchanger may include a bypass line 260 and valve 261 to selectively bypass the respective heat exchanger. Only one such bypass line is shown for clarity. A primary fuel heater heat exchanger 241 may be fed by steam 1590 from the HSRG (not shown), and the resultant heated fuel is delivered to combustor 120.

The valves 261 and bypass lines 260 (if connected on all heat exchangers) allow for improved control over fuel heating and machine efficiency. For example, heat exchangers 240 and 243 may be connected in a loop to only heat the water input to the HRSG. Heat exchangers 240 and 242 may be connected in a loop to pre-heat the fuel supply. This configuration may greatly reduce or eliminate the steam withdrawn from the HRSG, and will permit more steam to be directed into a steam turbine (not shown). As another example, heat exchangers 240, 242 and 243 could be connected in a loop. This configuration will pre-heat fuel 1360 and heat water 1570 going into the HRSG. Heat exchangers 240, 242 and 241 may be connected in a loop and this will maximize the fuel heating potential. Alternatively, all heat exchangers may be connected in a loop so that all heat exchangers will benefit from the heat removed from the compressed airflow of the compressor.

FIG. 16 is a partially schematic, axial sectional view through a portion of the turbomachine, according to an aspect of the present invention. A third cooling system 1650 is operatively connected to the turbine casing 131. For example, a fourth plurality of heat pipes 1652 are attached to the turbine casing and the heat pipes are also in thermal communication with the turbine casing. The heat pipes 1652 may be circumferentially located around the turbine casing and attached thereto by welds, fasteners, bolts, welded brackets, clamps or any other suitable attachment mechanism. The fourth plurality of heat pipes 1652 are operatively connected to a fourth manifold 1654, and the heat pipes 1652 and manifold 1654 are configured to transfer heat from the turbine casing 131 to one or more heat exchangers 240. The heat pipes 1652 absorb heat from the turbine casing 131. As the turbine 130 operates, hot combustion gases flow through the various turbine stages (three are shown). Some of the heat is transferred to the turbine casing, and this heat may be harvested by the heat pipes 1652. In one example, the heat pipes are welded to the turbine casing, and the heat pipes are configured to maintain close contact with the exterior surface of the turbine casing (to improve heat transfer). In other embodiments, the heat pipes 1652 may be contoured to follow the shape of the turbine casing, or the heat pipes may be embedded into the turbine casing.

An aftercooler 1620 is operatively connected to the outlet portion 204 of the compressor 110. The aftercooler 1620 includes a fifth plurality of heat pipes 1622 that extend into the outlet portion 204. The heat pipes 1622 are operatively connected to a fifth manifold 1624, and the fifth plurality of heat pipes 1622 and fifth manifold 1624 are configured to transfer heat from the compressed airflow in the outlet portion 204 to one or more heat exchangers 240. Some of the heat pipes 1622 are located in the compressor discharge case (CDC) 230 radially inward of the combustor 120, as shown by the heat pipes 1622 located near the outlet of the last stage of the compressor. Each heat pipe 1622 extends through the CDC 230 and into the compressed airflow flow path. The heat pipes 1622 that are located in the compressor outlet portion 204 radially outward from the combustor 120, are shown located near the transition piece 122 and near a compressed airflow inlet of the combustor 120. The radially inward and radially outward heat pipes 1622 may be used alone, or both may be used together. For example, for greater heat removal both sets radially located heat pipes 1622 may be employed. The heat pipes 1622 absorb heat from the compressed air and lower the temperature thereof.

The turbine 130 of a turbomachine utilizes air extracted from the compressor 110 to cool the hot metal components to a temperature that is tolerable to the component base metal properties. The turbine rotating components (e.g., wheels 133 and buckets 132) are cooled via internal passages while the stationary components (e.g., nozzles 134) are cooled via external passages. The rotating components may be cooled by air bled off from the compressor. This compressor bleed off air is routed to the rotating components (e.g., wheels 133) via duct 1641. The bleed off air passes over the wheels 133, thereby cooling the components via convective heat transfer. However, this cooling (or temperature management) process can be improved if the cooling air is reduced in temperature. According to the present invention, a fourth cooling system 1640 includes a sixth plurality of heat pipes 1642 located axially upstream of at least one of the plurality of wheels 133. As one example, a sixth plurality of heat pipes 1642 may be located or arranged circumferentially around the upstream side of wheel 133. The heat pipes can be affixed to the inside of the rotor barrel cooling chamber 1643. The heat pipes 1642 are operatively connected, via line 1644 to a bearing cooler system 1645. Line 1644 may also be heat pipes. The bearing cooler system 1645 cools bearing 1646 (sometimes referred to as bearing #2) and the lubrication oil associated with the bearing 1646. The heat pipes 1642, 1644 and the bearing cooler system 1645 are configured to transfer heat from the compressor bleed off air (exiting from duct 1641) to one or more heat exchangers 1647.

The sixth plurality of heat pipes 1642 may also be (or alternatively) operatively connected, via lines 1648 to a bearing cooler system 1645'. Lines 1648 may also be heat pipes. The bearing cooler system 1645' cools bearing 1646' (sometimes referred to as bearing #1) and the lubrication oil associated with the bearing 1646'. The heat pipes 1642, 1648 and the bearing cooler system 1645' are configured to transfer heat from the compressor bleed off air (exiting from duct 1641) to one or more heat exchangers 1647'.

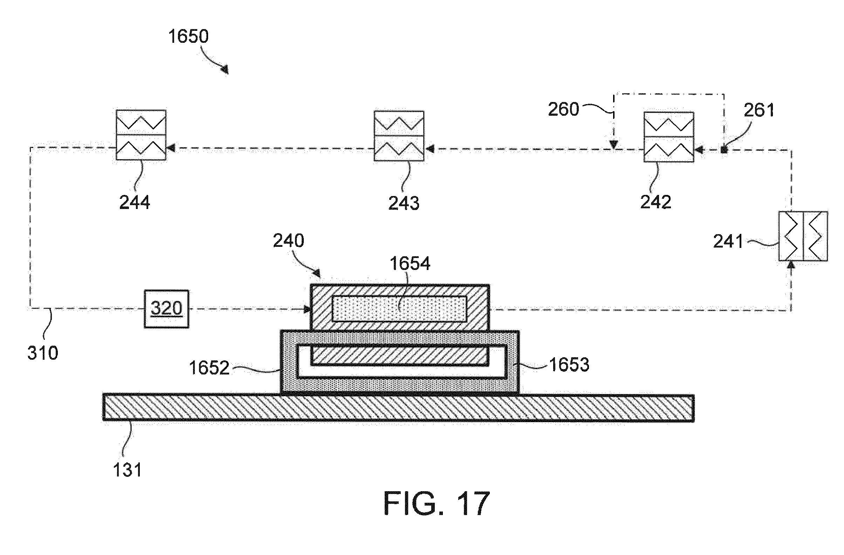

FIG. 17 illustrates a cross-sectional and schematic view of the third cooling system 1650, according to an aspect of the present invention. The fourth plurality of heat pipes 1652 are attached to the turbine casing 131. The heat pipe 1652 includes a heat transfer medium 1653, such as a liquid metal or molten salt. The fourth manifold 1654 includes a coolant/heat transfer medium, such as water, steam, glycol or oil. The manifold 1654 is thermally connected to a heat pipe heat exchanger 240. A conduit 310 connects the heat pipe heat exchanger 240 to a plurality of other heat exchangers. For example, the other heat exchangers may be a fuel heating heat exchanger 241, a fuel pre-heating heat exchanger 242, a HRSG heat exchanger 243 and any other desired heat exchanger 244. The heat pipe heat exchanger 240 transfers the heat from the manifolds 144 to the heat transfer medium in conduit 310.

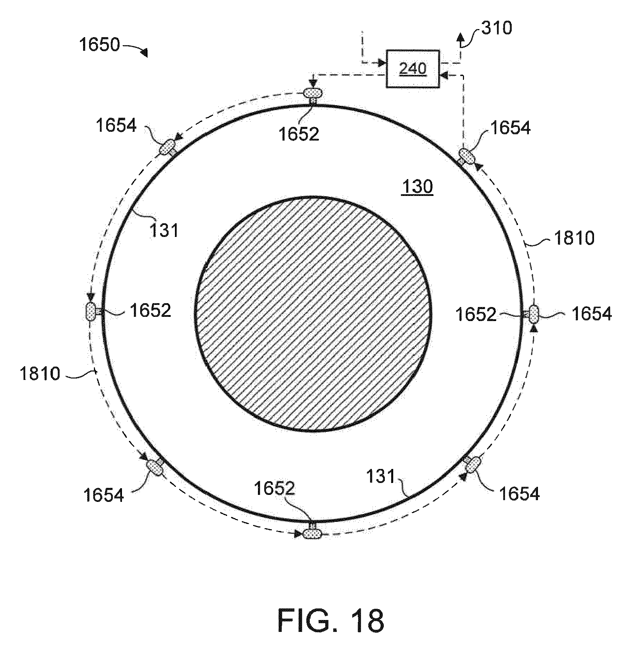

FIG. 18 illustrates a partially schematic and radial cross-sectional view of the third cooling system 1650, according to an aspect of the present invention. The fourth plurality of heat pipes 1652 are circumferentially located and distributed around the turbine casing 131. The fourth manifold 1654 is connected in a circuit represented by line 1810. For example, the manifold 1654 would form a generally continuous flow loop around the turbine 130. A portion of this flow loop is interrupted and routed to the heat pipe heat exchanger 240, and the outlet therefrom is routed back the manifold 1654. In this way, heat generated by the turbine casing 131 (via heat pipes 1652) can be transferred to the heat exchanger 240.

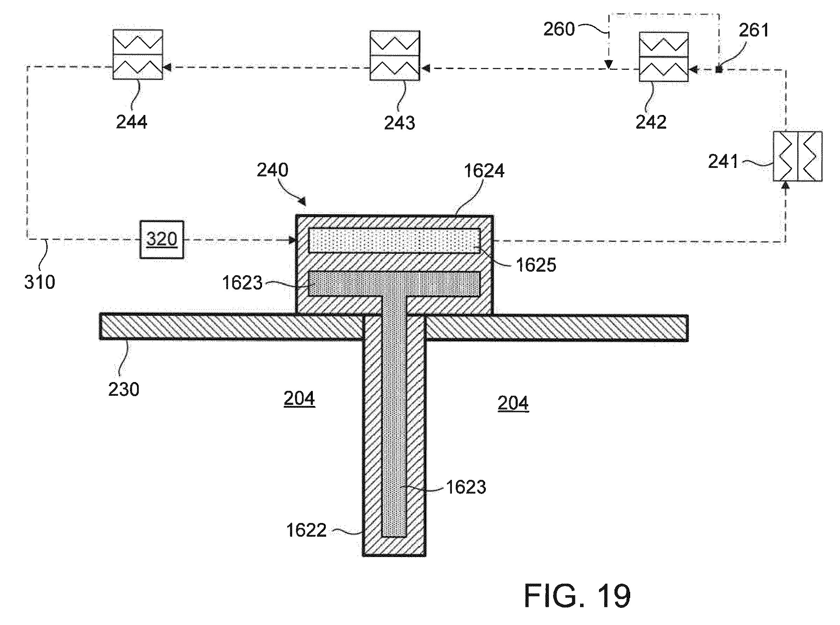

FIG. 19 illustrates a cross-sectional and schematic view of the aftercooler 1620, according to an aspect of the present invention. The fifth plurality of heat pipes 1622 extend through the CDC shell 230 or turbomachine shell and into the compressor's outlet portion 204. The heat pipe 1622 includes a heat transfer medium 1623, such as a liquid metal or molten salt. The fifth manifold 1624 includes a coolant/heat transfer medium 1625, such as water, glycol or oil. The fifth manifold 1624 is thermally connected to a heat pipe heat exchanger 240. A conduit 310 connects the heat pipe heat exchanger 240 to a plurality of other heat exchangers. For example, the other heat exchangers may be a fuel heating heat exchanger 241, a fuel pre-heating heat exchanger 242, a HRSG heat exchanger 243 and any other desired heat exchanger 244. The heat pipe heat exchanger 240 transfers the heat from the manifold 1624 to the heat transfer medium in conduit 310.

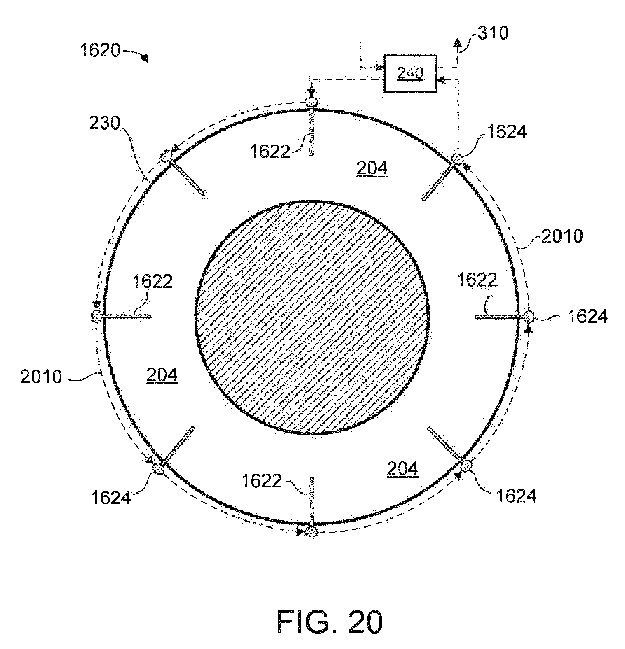

FIG. 20 illustrates a partially schematic and radial cross-sectional view of the aftercooler 1620, according to an aspect of the present invention. The heat pipes 1622 are circumferentially located and distributed around the turbomachine 100 or compressor 110. The manifold 1624 is connected in a circuit represented by line 2010. For example, the manifold 1624 would form a generally continuous flow loop around the turbomachine. A portion of this flow loop is interrupted and routed to the heat pipe heat exchanger 240, and the outlet therefrom is routed back the manifold 1624. In this way, heat generated by the compressor airflow (via heat pipes 1622) can be transferred to the heat exchanger 240.

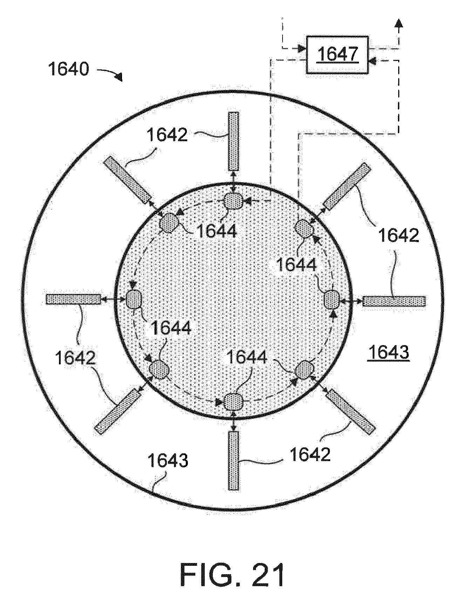

FIG. 21 illustrates a cross-sectional and schematic view of the fourth cooling system 1640, according to an aspect of the present invention. The sixth plurality of heat pipes 1642 are located in the rotor barrel cooling chamber 1643. The heat pipe 1642, which is connected to heat pipes 1644, extends to and is in thermal communication with bearing 1646 and/or heat exchanger 1647. The heat pipes 1642 are arranged circumferentially about the rotor barrel cooling chamber 1643. Heat from the compressor discharge bleed off air is transferred from the heat pipes 1642, 1644 to the bearing 1646 and heat exchanger 1647.

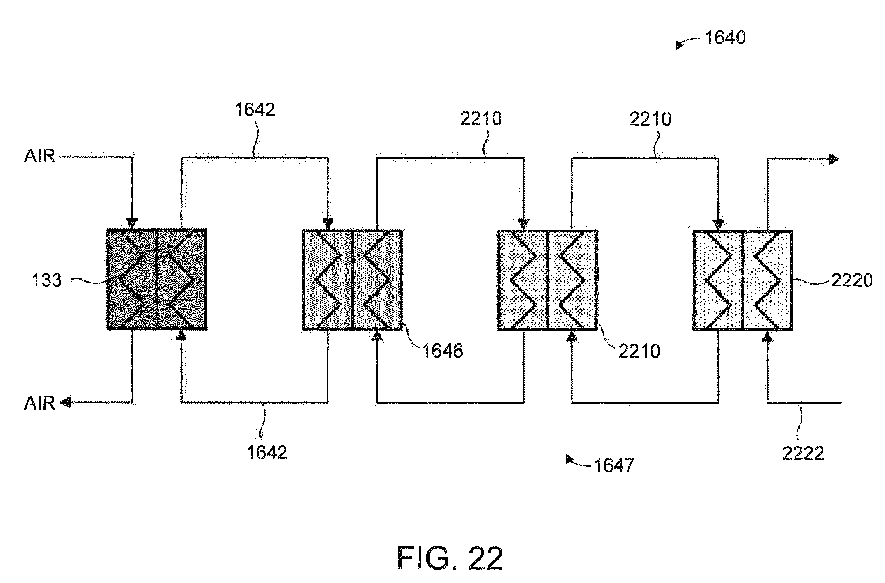

FIG. 22 illustrates a schematic representation of fourth cooling system 1640, according to an aspect of the present invention. The compressor bleed off air exits duct 1641 and impinges on wheel 133. Heat from the bleed off air is absorbed by heat pipes 1642 and is conducted or transferred to bearing 1646. The bearing lubrication oil 2210 absorbs heat from the bearing and the heat pipes 1642, 1644, and a lubrication oil cooler/heat exchanger 2220 transfers the absorbed heat to a heat transfer medium 2222, such as ambient air or water. Heat exchanger 1647, 1647' may include some or all of bearing 1646, oil 2210 and/or heat exchanger 2220.

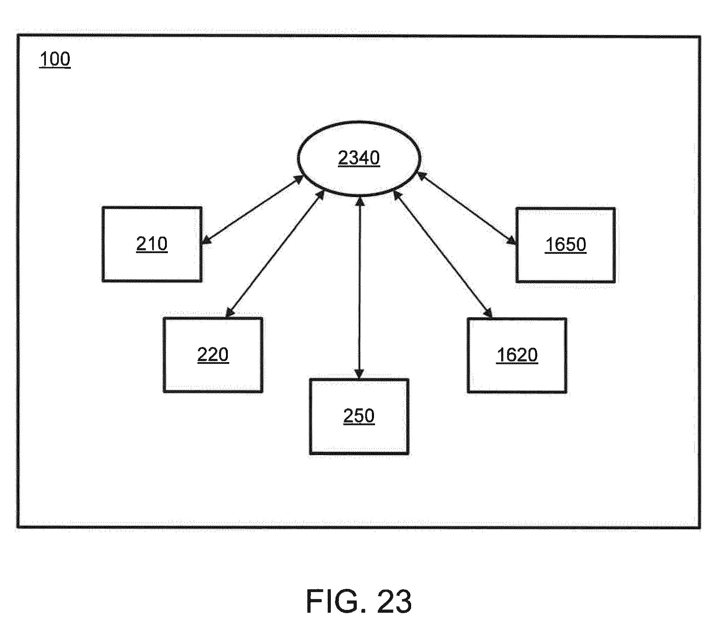

FIG. 23 illustrates a simplified block diagram of the turbomachine 100 incorporating the first cooling system 210, intercooler 220, second cooling system 250, aftercooler 1620 and third cooling system 1650, according to an aspect of the present invention. The intercooler, aftercooler and first, second and third cooling systems may be connected to heat exchangers 2340, which may be one heat exchanger or more than one heat exchanger. In addition, all or any combination of intercooler, aftercooler and/or cooling systems may be employed in the desired application. As non-limiting examples only, a turbomachine may only employ the intercooler 220 and first cooling system 210, or the turbomachine may employ intercooler 220, first cooling system 210 and second cooling system 250, or the turbomachine may employ intercooler 220, first cooling system 210, second cooling system 250, and third cooling system 1650, or the turbomachine may employ intercooler 220, first cooling system 210, second cooling system 250, third cooling system 1650 and aftercooler 1620, or any subcombination of the intercooler, aftercooler, first cooling system, second cooling system, third cooling system and fourth cooling system.

The manifolds herein described may include a heat transfer medium, such as water, steam, glycol or oil, or any other suitable fluid. Each manifold may be connected to multiple heat pipes, and the heat pipes may be arranged circumferentially about the compressor, the turbine or the turbomachine. The heat pipes include a heat transfer medium which may be a liquid metal, molten salt or Qu material. As examples only, the heat transfer medium may be one or combinations of, aluminum, beryllium, beryllium-fluorine alloy, boron, calcium, cobalt, lead-bismuth alloy, liquid metal, lithium-chlorine alloy, lithium-fluorine alloy, manganese, manganese-chlorine alloy, mercury, molten salt, potassium, potassium-chlorine alloy, potassium-fluorine alloy, potassium-nitrogen-oxygen alloy, rhodium, rubidium-chlorine alloy, rubidium-fluorine alloy, sodium, sodium-chlorine alloy, sodium-fluorine alloy, sodium-boron-fluorine alloy, sodium nitrogen-oxygen alloy, strontium, tin, zirconium-fluorine alloy. As one specific example, the heat transfer medium may be a molten salt comprising potassium and/or sodium. The outer portion of the heat pipes may be made of any suitable material capable of serving the multiple purposes of high thermal conductivity, high strength and high resistance to corrosion from the heat transfer medium.

The heat pipes herein described may also be formed of a "Qu-material" having a very high thermal conductivity. The Qu-material may be in the form of a multi-layer coating provided on the interior surfaces of the heat pipes. For example, a solid state heat transfer medium may be applied to the inner walls in three basic layers. The first two layers are prepared from solutions which are exposed to the inner wall of the heat pipe. Initially the first layer which primarily comprises, in ionic form, various combinations of sodium, beryllium, a metal such as manganese or aluminum, calcium, boron, and a dichromate radical, is absorbed into the inner wall to a depth of 0.008 mm to 0.012 mm. Subsequently, the second layer which primarily comprises, in ionic form, various combinations of cobalt, manganese, beryllium, strontium, rhodium, copper, B-titanium, potassium, boron, calcium, a metal such as aluminum and the dichromate radical, builds on top of the first layer and forms a film having a thickness of 0.008 mm to 0.012 mm over the inner wall of the heat pipe. Finally, the third layer is a powder comprising various combinations of rhodium oxide, potassium dichromate, radium oxide, sodium dichromate, silver dichromate, monocrystalline silicon, beryllium oxide, strontium chromate, boron oxide, B-titanium and a metal dichromate, such as manganese dichromate or aluminum dichromate, which evenly distributes itself across the inner wall. The three layers are applied to the heat pipe and are then heat polarized to form a superconducting heat pipe that transfers thermal energy with little or no net heat loss.

The intercooling, aftercooling and cooling systems of the present invention provide a number of advantages. Compressor and turbine efficiency may be improved and a reduced steam demand for fuel heating results in improved combined cycle heat rate. Compressor mass flow rate may be increased and the reduced steam demand for fuel heating improves combined cycle output. The turbine section buckets, wheels and combustion gas transition pieces may have improved lifespans due to the cooler compressor discharge airflow and lower operating temperatures.

This written description uses examples to disclose the invention, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. A turbomachine comprising:
   a compressor including an intake portion and an outlet portion, the compressor having a plurality of rotor blades and a plurality of stator vanes, and an inter-stage gap exists between adjacent rows of rotor blades and stator vanes, the compressor compressing air received at the intake portion to form a compressed airflow that exits into the outlet portion;
   a combustor operably connected with the compressor, the combustor receiving the compressed airflow;
   a turbine operably connected with the combustor, the turbine receiving combustion gas flow from the combustor, the turbine having a plurality of wheels and a plurality of nozzles, a turbine casing forming an outer shell of the turbine, and the turbine receiving compressor bleed off air to cool at least one of the plurality of wheels;
   an intercooler operatively connected to the compressor, the intercooler including a first plurality of heat pipes that extend into the inter-stage gap, the first plurality of heat pipes operatively connected to a first manifold, the first plurality of heat pipes and the first manifold are configured to transfer heat from the compressed airflow to one or more heat exchangers; and
   a first cooling system operatively connected to the turbine, the first cooling system including a second plurality of heat pipes attached to or embedded within at least one of the plurality of wheels, the compressor bleed off air is configured to impinge onto at least one of the plurality of wheels or the second plurality of heat pipes, and wherein the second plurality of heat pipes and the compressor bleed off air are configured to cool at least one of the plurality of wheels.
2. The turbomachine of clause 1, further comprising:
   a second cooling system operatively connected to the turbine, the second cooling system including a third plurality of heat pipes located in at least a portion of the plurality of nozzles, the third plurality of heat pipes operatively connected to a third manifold, the third plurality of heat pipes and the third manifold are configured to transfer heat from the plurality of nozzles to the one or more heat exchangers.
3. The turbomachine of any preceding clause, further comprising:
   a third cooling system operatively connected to the turbine casing, the third cooling system including a fourth plurality of heat pipes attached to and in thermal communication with the turbine casing, the fourth plurality of heat pipes operatively connected to a fourth manifold, the fourth plurality of heat pipes and the fourth manifold are configured to transfer heat from the turbine casing to the one or more heat exchangers.
4. The turbomachine of any preceding clause, further comprising:
   an aftercooler operatively connected to the outlet portion of the compressor, the aftercooler including a fifth plurality of heat pipes that extend into the outlet portion, the fifth plurality of heat pipes operatively connected to a fifth manifold, the fifth plurality of heat pipes and the fifth manifold are configured to transfer heat from the compressed airflow in the outlet portion to the one or more heat exchangers.
5. The turbomachine of any preceding clause, the first plurality of heat pipes and the second plurality of heat pipes further comprising a heat transfer medium including one or combinations of:
   aluminum, beryllium, beryllium-fluorine alloy, boron, calcium, cesium, cobalt, lead-bismuth alloy, liquid metal, lithium-chlorine alloy, lithium-fluorine alloy, manganese, manganese-chlorine alloy, mercury, molten salt, potassium, potassium-chlorine alloy, potassium-fluorine alloy, potassium-nitrogen-oxygen alloy, rhodium, rubidium-chlorine alloy, rubidium-fluorine alloy, sodium, sodium-chlorine alloy, sodium-fluorine alloy, sodium-boron-fluorine alloy, sodium nitrogen-oxygen alloy, strontium, tin, zirconium-fluorine alloy.
6. The turbomachine of any preceding clause, the first plurality of heat pipes and the second plurality of heat pipes further comprising a molten salt heat transfer medium including one or combinations of, potassium, sodium or cesium.
7. The turbomachine of any preceding clause, further comprising:
   the first plurality of heat pipes located in the inter-stage gap corresponding to an air bleed-off stage of the compressor;
   the compressor bleed off air being withdrawn from at or between a first stage of the compressor and a third stage of the compressor; and
   the second plurality of heat pipes located in or on a first stage turbine wheel, and the compressor bleed off air configured to impinge on an inner low pressure radius of the first stage turbine wheel.
8. The turbomachine of any preceding clause, wherein the first plurality of heat pipes and the second plurality of heat pipes have a cross-sectional shape, the cross sectional shape generally comprising at least one of:
   circular, oval, rectangular with rounded corners or polygonal.
9. The turbomachine of any preceding clause, at least one of the first plurality of heat pipes or the second plurality of heat pipes further comprising a plurality of fins, the plurality of fins configured to increase the heat transfer capability of the plurality of heat pipes.
10. The turbomachine of any preceding clause, the one or more heat exchangers including a heat pipe heat exchanger operably connected to at least one of:
   a fuel heating heat exchanger; or
   a heat recovery steam generator heat exchanger; or
   a fuel heating heat exchanger and a heat recovery steam generator heat exchanger.
11. A temperature management system for a turbomachine, the turbomachine having a compressor including an intake portion and an outlet portion, the compressor having a plurality of rotor blades and a plurality of stator vanes, and an inter-stage gap that exists between adjacent rows of rotor blades and stator vanes, the compressor compressing air received at the intake portion to form a compressed airflow that exits into the outlet portion, a combustor operably connected with the compressor, the combustor receiving the compressed airflow, and a turbine operably connected with the combustor, the turbine receiving combustion gas flow from the combustor, the turbine having a plurality of turbine blades, a plurality of wheels and a plurality of nozzles, a turbine casing forming an outer shell of the turbine, the turbine receiving compressor bleed off air to cool at least one of the plurality of wheels, the temperature management system comprising:
   an intercooler operatively connected to the compressor, the intercooler including a first plurality of heat pipes that extend into the inter-stage gap, the first plurality of heat pipes operatively connected to a first manifold, the first plurality of heat pipes and the first manifold are configured to transfer heat from the compressed airflow to one or more heat exchangers; and
   a first cooling system operatively connected to the turbine, the first cooling system including a second plurality of heat pipes attached to or embedded within at least one of the plurality of wheels, the compressor bleed off air from the compressor is configured to impinge onto at least one of the plurality of wheels or the second plurality of heat pipes, and wherein the second plurality of heat pipes and the compressor bleed off air are configured to cool at least one of the plurality of wheels.
12. The temperature management system of any preceding clause, further comprising:
   a second cooling system operatively connected to the turbine, the second cooling system including a third plurality of heat pipes located in at least a portion of the plurality of nozzles, the third plurality of heat pipes operatively connected to a third manifold, the third plurality of heat pipes and the third manifold are configured to transfer heat from the plurality of nozzles to the one or more heat exchangers.
13. The temperature management system of any preceding clause, further comprising:
   a third cooling system operatively connected to the turbine casing, the third cooling system including a fourth plurality of heat pipes attached to and in thermal communication with the turbine casing, the fourth plurality of heat pipes operatively connected to a fourth manifold, the fourth plurality of heat pipes and the fourth manifold are configured to transfer heat from the turbine casing to the one or more heat exchangers.
14. The temperature management system of any preceding clause, further comprising:
   an aftercooler operatively connected to the outlet portion of the compressor, the aftercooler including a fifth plurality of heat pipes that extend into the outlet portion, the fifth plurality of heat pipes operatively connected to a fifth manifold, the fifth plurality of heat pipes and the fifth manifold are configured to transfer heat from the compressed airflow in the outlet portion to the one or more heat exchangers.
15. The temperature management system of any preceding clause, the first plurality of heat pipes and the second plurality of heat pipes further comprising a heat transfer medium including one or combinations of:
   aluminum, beryllium, beryllium-fluorine alloy, boron, calcium, cesium, cobalt, lead-bismuth alloy, liquid metal, lithium-chlorine alloy, lithium-fluorine alloy, manganese, manganese-chlorine alloy, mercury, molten salt, potassium, potassium-chlorine alloy, potassium-fluorine alloy, potassium-nitrogen-oxygen alloy, rhodium, rubidium-chlorine alloy, rubidium-fluorine alloy, sodium, sodium-chlorine alloy, sodium-fluorine alloy, sodium-boron-fluorine alloy, sodium nitrogen-oxygen alloy, strontium, tin, zirconium-fluorine alloy.
16. The temperature management system of any preceding clause, the first plurality of heat pipes and the second plurality of heat pipes further comprising a molten salt heat transfer medium including one or combinations of, potassium, sodium or cesium.
17. The temperature management system of any preceding clause, further comprising:
   the first plurality of heat pipes located in the inter-stage gap corresponding to an air bleed-off stage of the compressor;
   the compressor bleed off air being withdrawn from at or between a first stage of the compressor and a third stage of the compressor; and
   the second plurality of heat pipes located in or on a first stage turbine wheel, and the compressor bleed off air configured to impinge on an inner low pressure radius of the first stage turbine wheel.
18. The temperature management system of any preceding clause, wherein the first plurality of heat pipes and the second plurality of heat pipes have a cross-sectional shape, the cross sectional shape generally comprising at least one of:
   circular, oval, rectangular with rounded corners or polygonal.
19. The temperature management system of any preceding clause, at least one of the first plurality of heat pipes or the second plurality of heat pipes further comprising a plurality of fins, the plurality of fins configured to increase the heat transfer capability of the plurality of heat pipes.
20. The temperature management system of any preceding clause, the one or more heat exchangers including a heat pipe heat exchanger operably connected to at least one of:
   a fuel heating heat exchanger; or
   a heat recovery steam generator heat exchanger; or
   a fuel heating heat exchanger and a heat recovery steam generator heat exchanger.

## Claims

1. A turbomachine comprising:
a compressor including an intake portion and an outlet portion, the compressor having a plurality of rotor blades and a plurality of stator vanes, and an inter-stage gap exists between adjacent rows of rotor blades and stator vanes, the compressor compressing air received at the intake portion to form a compressed airflow that exits into the outlet portion;
a combustor operably connected with the compressor, the combustor receiving the compressed airflow;
a turbine operably connected with the combustor, the turbine receiving combustion gas flow from the combustor, the turbine having a plurality of wheels and a plurality of nozzles, a turbine casing forming an outer shell of the turbine, and the turbine receiving compressor bleed off air to cool at least one of the plurality of wheels;
an intercooler operatively connected to the compressor, the intercooler including a first plurality of heat pipes that extend into the inter-stage gap, the first plurality of heat pipes operatively connected to a first manifold, the first plurality of heat pipes and the first manifold are configured to transfer heat from the compressed airflow to one or more heat exchangers; and
a first cooling system operatively connected to the turbine, the first cooling system including a second plurality of heat pipes attached to or embedded within at least one of the plurality of wheels, the compressor bleed off air is configured to impinge onto at least one of the plurality of wheels or the second plurality of heat pipes, and wherein the second plurality of heat pipes and the compressor bleed off air are configured to cool at least one of the plurality of wheels.

2. The turbomachine of claim 1, further comprising:
a second cooling system operatively connected to the turbine, the second cooling system including a third plurality of heat pipes located in at least a portion of the plurality of nozzles, the third plurality of heat pipes operatively connected to a third manifold, the third plurality of heat pipes and the third manifold are configured to transfer heat from the plurality of nozzles to the one or more heat exchangers.

3. The turbomachine of claim 2, further comprising:
a third cooling system operatively connected to the turbine casing, the third cooling system including a fourth plurality of heat pipes attached to and in thermal communication with the turbine casing, the fourth plurality of heat pipes operatively connected to a fourth manifold, the fourth plurality of heat pipes and the fourth manifold are configured to transfer heat from the turbine casing to the one or more heat exchangers.

4. The turbomachine of claim 3, further comprising:
an aftercooler operatively connected to the outlet portion of the compressor, the aftercooler including a fifth plurality of heat pipes that extend into the outlet portion, the fifth plurality of heat pipes operatively connected to a fifth manifold, the fifth plurality of heat pipes and the fifth manifold are configured to transfer heat from the compressed airflow in the outlet portion to the one or more heat exchangers.

5. The turbomachine of any preceding claim, the first plurality of heat pipes and the second plurality of heat pipes further comprising a heat transfer medium including one or combinations of:
aluminum, beryllium, beryllium-fluorine alloy, boron, calcium, cesium, cobalt, lead-bismuth alloy, liquid metal, lithium-chlorine alloy, lithium-fluorine alloy, manganese, manganese-chlorine alloy, mercury, molten salt, potassium, potassium-chlorine alloy, potassium-fluorine alloy, potassium-nitrogen-oxygen alloy, rhodium, rubidium-chlorine alloy, rubidium-fluorine alloy, sodium, sodium-chlorine alloy, sodium-fluorine alloy, sodium-boron-fluorine alloy, sodium nitrogen-oxygen alloy, strontium, tin, zirconium-fluorine alloy.

6. The turbomachine of any preceding claim, the first plurality of heat pipes and the second plurality of heat pipes further comprising a molten salt heat transfer medium including one or combinations of, potassium, sodium or cesium.

7. The turbomachine of any preceding claim, further comprising:
the first plurality of heat pipes located in the inter-stage gap corresponding to an air bleed-off stage of the compressor;
the compressor bleed off air being withdrawn from at or between a first stage of the compressor and a third stage of the compressor; and
the second plurality of heat pipes located in or on a first stage turbine wheel, and the compressor bleed off air configured to impinge on an inner low pressure radius of the first stage turbine wheel.

8. The turbomachine of any preceding claim, wherein the first plurality of heat pipes and the second plurality of heat pipes have a cross-sectional shape, the cross sectional shape generally comprising at least one of:
circular, oval, rectangular with rounded corners or polygonal.

9. The turbomachine of claim 8, at least one of the first plurality of heat pipes or the second plurality of heat pipes further comprising a plurality of fins, the plurality of fins configured to increase the heat transfer capability of the plurality of heat pipes.

10. The turbomachine of any preceding claim, the one or more heat exchangers including a heat pipe heat exchanger operably connected to at least one of:
a fuel heating heat exchanger; or
a heat recovery steam generator heat exchanger; or
a fuel heating heat exchanger and a heat recovery steam generator heat exchanger.

11. A temperature management system for a turbomachine, the turbomachine having a compressor including an intake portion and an outlet portion, the compressor having a plurality of rotor blades and a plurality of stator vanes, and an inter-stage gap that exists between adjacent rows of rotor blades and stator vanes, the compressor compressing air received at the intake portion to form a compressed airflow that exits into the outlet portion, a combustor operably connected with the compressor, the combustor receiving the compressed airflow, and a turbine operably connected with the combustor, the turbine receiving combustion gas flow from the combustor, the turbine having a plurality of turbine blades, a plurality of wheels and a plurality of nozzles, a turbine casing forming an outer shell of the turbine, the turbine receiving compressor bleed off air to cool at least one of the plurality of wheels, the temperature management system comprising:
an intercooler operatively connected to the compressor, the intercooler including a first plurality of heat pipes that extend into the inter-stage gap, the first plurality of heat pipes operatively connected to a first manifold, the first plurality of heat pipes and the first manifold are configured to transfer heat from the compressed airflow to one or more heat exchangers; and
a first cooling system operatively connected to the turbine, the first cooling system including a second plurality of heat pipes attached to or embedded within at least one of the plurality of wheels, the compressor bleed off air from the compressor is configured to impinge onto at least one of the plurality of wheels or the second plurality of heat pipes, and wherein the second plurality of heat pipes and the compressor bleed off air are configured to cool at least one of the plurality of wheels.

12. The temperature management system of claim 11, further comprising:
a second cooling system operatively connected to the turbine, the second cooling system including a third plurality of heat pipes located in at least a portion of the plurality of nozzles, the third plurality of heat pipes operatively connected to a third manifold, the third plurality of heat pipes and the third manifold are configured to transfer heat from the plurality of nozzles to the one or more heat exchangers.

13. The temperature management system of claim 11 or claim 12, further comprising:
a third cooling system operatively connected to the turbine casing, the third cooling system including a fourth plurality of heat pipes attached to and in thermal communication with the turbine casing, the fourth plurality of heat pipes operatively connected to a fourth manifold, the fourth plurality of heat pipes and the fourth manifold are configured to transfer heat from the turbine casing to the one or more heat exchangers.

14. The temperature management system of claim 11, 12 or 13, further comprising:
an aftercooler operatively connected to the outlet portion of the compressor, the aftercooler including a fifth plurality of heat pipes that extend into the outlet portion, the fifth plurality of heat pipes operatively connected to a fifth manifold, the fifth plurality of heat pipes and the fifth manifold are configured to transfer heat from the compressed airflow in the outlet portion to the one or more heat exchangers.

15. The temperature management system of claim 11, 12, 13 or 14, the first plurality of heat pipes and the second plurality of heat pipes further comprising a heat transfer medium including one or combinations of:
aluminum, beryllium, beryllium-fluorine alloy, boron, calcium, cesium, cobalt, lead-bismuth alloy, liquid metal, lithium-chlorine alloy, lithium-fluorine alloy, manganese, manganese-chlorine alloy, mercury, molten salt, potassium, potassium-chlorine alloy, potassium-fluorine alloy, potassium-nitrogen-oxygen alloy, rhodium, rubidium-chlorine alloy, rubidium-fluorine alloy, sodium, sodium-chlorine alloy, sodium-fluorine alloy, sodium-boron-fluorine alloy, sodium nitrogen-oxygen alloy, strontium, tin, zirconium-fluorine alloy.
